# EUROPÄISCHE PATENTSCHRIFT

(11) **EP 2 938 522 B1**
(45) Veröffentlichungstag und Bekanntmachung des Hinweises auf die Patenterteilung: **12.08.2020**
(21) Anmeldenummer: 13805335.0
(22) Anmeldetag: 10.12.2013
(51) Int. Cl.: B60S 1/08, B60S 1/48

(54) **WISCHVORRICHTUNG UND VERFAHREN ZU IHRER ANSTEUERUNG**
WIPING DEVICE AND DRIVING METHOD THEREFORE
DISPOSITIF D'ESSESSUYAGE ET SA MÉTHODE DE COMMANDE

(30) Priorität: 28.12.2012 DE 102012224478
(43) Veröffentlichungstag der Anmeldung: 04.11.2015
(73) Patentinhaber: Robert Bosch GmbH, 70442 Stuttgart (DE)
(72) Erfinder: KRAEMER, Godelieve, 76549 Huegelsheim (DE); ERNST, Waldemar, 71665 Vaihingen/Enz (DE)
(86) Internationale Anmeldenummer: PCT/EP2013/076105
(87) Internationale Veröffentlichungsnummer: WO 2014/102060

(56) Entgegenhaltungen:
- DE-A1-102006 061 631
- DE-A1-102009 055 169
- DE-A1-102010 055 361
- DE-U1- 9 402 090
- FR-A1- 2 789 034

## Beschreibung

### Stand der Technik

Es ist bereits ein Verfahren zur Ansteuerung einer Wischvorrichtung über eine Steuer- und/oder Regeleinheit bekannt. Derartige Verfahren finden insbesondere Anwendung in Kraftfahrzeugen um Fahrzeugscheiben komfortabel zu wischen. Die Steuer- und/oder Regeleinheit kann hierbei zumindest teilautomatisch ablaufende Funktionen übernehmen, wie insbesondere Intervallwischfunktionen, Anpassungen einer Wischgeschwindigkeit und/oder Auftragen von Waschwasser auf die Fahrzeugscheibe und anschließendes Verteilen durch ein begrenztes Intervallwischen. Es ist weiterhin bekannt, die Steuer- und/oder Regeleinheit mit einem Regensensor zu koppeln, welche einen Fahrzeugscheibenbedeckungsparameter ermittelt und in dessen Abhängigkeit die Wischvorrichtung angesteuert wird.

Ein Verfahren zur Ansteuerung einer Wischvorrichtung nach dem Oberbegriff des Anspruchs 1 ist aus der DE 10 2009 055 169 A1 bekannt. Als weiterer Stand der Technik sind die DE 10 2006 061631 A1, die DE 9 402 090 U1, sowie die DE 10 2010 055 361 A1 bekannt geworden.

### Offenbarung der Erfindung

Die Erfindung geht aus von einem Verfahren zur Ansteuerung einer Wischvorrichtung über eine Steuer- und/oder Regeleinheit, sowie von einer Wischvorrichtung mit einer Steuer- und/oder Regeleinheit.

Es wird vorgeschlagen, dass zumindest ein Betriebsparameter in Abhängigkeit von zumindest einem von einem Fahrzeugscheibenbedeckungsparameter verschiedenen Parameter eingestellt wird, wodurch ein Wischverhalten vorteilhaft an Umgebungsgegebenheiten und/oder Fahrzeugeinstellungen angepasst werden kann. Ferner kann ein besonders gutes Wischergebnis bei geringem Waschwasserverbrauch erreicht werden. Unter einer "Wischvorrichtung" soll in diesem Zusammenhang insbesondere eine Vorrichtung verstanden werden, die dazu vorgesehen ist, eine Scheibe, insbesondere eine Fahrzeugscheibe zu wischen. Dazu umfasst die Wischvorrichtung insbesondere zumindest eine Steuer- und/oder Regeleinheit, zumindest einen Wischaktuator, zumindest eine Waschwasserpumpe, zumindest eine Waschwasserdüse, zumindest einen Wischarm und/oder zumindest ein Wischblatt. Die Wischvorrichtung ist insbesondere zumindest teilweise in einem Kraftfahrzeug, insbesondere an einer Kraftfahrzeugkarosserie angeordnet. Es ist in diesem Zusammenhang insbesondere denkbar, die Wischvorrichtung zum Wischen einer Front- und/oder einer Heckscheibe anzuwenden. Unter einer "Steuer- und/oder Regeleinheit" soll insbesondere eine Einheit mit zumindest einem Steuergerät verstanden werden. Unter einem "Steuergerät" soll insbesondere eine Einheit mit einer Prozessoreinheit und mit einer Speichereinheit sowie mit einem in der Speichereinheit gespeicherten Betriebsprogramm verstanden werden. Grundsätzlich kann die Steuer- und/oder Regeleinheit mehrere untereinander verbundene Steuergeräte aufweisen, die vorzugsweise dazu vorgesehen sind, über ein Bus-System, wie insbesondere ein CAN-Bus-System, miteinander zu kommunizieren. Unter einem "Betriebsparameter" soll in diesem Zusammenhang insbesondere ein von der Steuer- und/oder Regeleinheit eingestellter Parameter verstanden werden, der zumindest eine Betriebsinformation zumindest eines Wischvorgangs aufweist. Ein Betriebsparameter weist insbesondere zumindest eine Information über eine Wischgeschwindigkeit, eine Wischintervallzeit, ein Maximaldrehmoment, eine Gesamtwischlaufzeit, eine Waschwassermenge und/oder einen Waschwasserdruck auf. Unter einem "Fahrzeugscheibenbedeckungsparameter" soll in diesem Zusammenhang insbesondere ein Parameter verstanden werden, der einen Bedeckungsgrad beispielsweise durch Regenwasser, Schnee und/oder Schmutz einer Fahrzeugscheibe beschreibt. Insbesondere soll unter einem Fahrzeugscheibenbedeckungsparameter ein von einem Regensensor ermittelter Parameter verstanden werden. Unter einem "Parameter" soll in diesem Zusammenhang insbesondere ein Wert verstanden werden, der einen Umgebungszustand und/oder einen Fahrzeugzustand beschreibt. Insbesondere beschreibt der Parameter eine Außentemperatur, eine Umgebungshelligkeit, eine geographische Fahrzeugposition, eine Fahrtgeschwindigkeit, ein Insektenaufkommen und/oder eine Datums- und/oder Uhrzeitangabe. Insbesondere wird der zumindest eine Betriebsparameter in Abhängigkeit von dem zumindest einen von dem Fahrzeugscheibenbedeckungsparameter verschiedenen Parameter teilautomatisch oder bevorzugt vollautomatisch, insbesondere ohne einen Eingriff durch einen Benutzer, eingestellt. Unter "vorgesehen" soll insbesondere speziell programmiert, ausgelegt und/oder ausgestattet verstanden werden.

Erfindungsgemäß wird der zumindest eine Betriebsparameter in Abhängigkeit zumindest einer Außentemperatur eingestellt, wodurch ein Wischverhalten vorteilhaft an unterschiedliche Außentemperaturen angepasst werden kann. Unter einer "Außentemperatur" soll in diesem Zusammenhang insbesondere eine Außentemperatur außerhalb eines Kraftfahrzeugs verstanden werden, an welchem die Wischvorrichtung angeordnet ist. Es ist in diesem Zusammenhang auch denkbar, dass die Außentemperatur aus einem Mittelwert mehrerer Außentemperaturen, insbesondere verschiedener Temperatursensoren, gebildet ist.

Des Weiteren wird vorgeschlagen, dass bei einem Unterschreiten der zumindest einen Außentemperatur unter eine erste Grenztemperatur ein Winterprogramm aktiviert wird, wodurch ein Wischverhalten vorteilhaft an winterliche Verhältnisse angepasst werden kann. Unter einer "Grenztemperatur" soll in diesem Zusammenhang insbesondere ein eingestellter Temperaturgrenzwert verstanden werden, der einen Schaltpunkt, insbesondere der Steuer- und/oder Regeleinheit bildet. Unter einem "Winterprogramm" soll in diesem Zusammenhang insbesondere ein Datensatz verstanden werden, der insbesondere zumindest einen Betriebsparameter umfasst, der zur Durchführung eines Wischvorgangs bei winterlichen Verhältnissen geeignet ist.

Ferner wird vorgeschlagen, dass die erste Grenztemperatur einen Wert von maximal 4°C aufweist, wodurch vorteilhaft eine Frostgefahr beim Wischverhalten berücksichtigt werden kann. Bevorzugt weist die erste Grenztemperatur einen Wert zwischen -6°C und 4°C, weiterhin bevorzugt zwischen -2°C und 2°C auf.

Ein Wischverhalten kann vorteilhaft an herbstliche und/oder frühlingshafte Witterungsverhältnisse angepasst werden, wenn bei einem Unterschreiten der zumindest einen Außentemperatur unter eine zweite Grenztemperatur ein Übergangsprogramm aktiviert wird. Unter einem "Übergangsprogramm" soll in diesem Zusammenhang insbesondere ein Datensatz verstanden werden, der insbesondere zumindest einen Betriebsparameter umfasst, der zur Durchführung eines Wischvorgangs bei herbstlichen und/oder frühlingshaften Verhältnissen geeignet ist.

An sommerliche Witterungsverhältnisse kann das Wischverhalten vorteilhaft angepasst werden, wenn bei einem Überschreiten einer zweiten Grenztemperatur ein Sommerprogramm aktiviert wird. Unter einem "Sommerprogramm" soll in diesem Zusammenhang insbesondere ein Datensatz verstanden werden, der insbesondere zumindest einen Betriebsparameter umfasst, der zur Durchführung eines Wischvorgangs bei sommerlichen Verhältnissen geeignet ist.

Eine besonders einfache Festlegung eines geeigneten Betriebsprogramms, insbesondere für ein Übergangsprogramm und/oder ein Sommerprogramm kann erreicht werden, wenn die zweite Grenztemperatur einen Wert zwischen 6°C und 14°C aufweist.

Waschwasser kann vorteilhaft eingespart werden, wenn bei einem Auftragen von Waschwasser der zumindest eine Betriebsparameter berücksichtigt wird. Unter "Waschwasser" soll in diesem Zusammenhang insbesondere eine zum Waschen und/oder Reinigen einer Fahrzeugscheibe geeignete Flüssigkeit verstanden werden, wie insbesondere Wasser, Alkohole oder Gemische, die einen Wasseranteil und/oder Alkoholanteil aufweisen.

Ein besonders präzise ablaufender Wischvorgang kann erzielt werden, wenn ein Auftragen von Waschwasser über zumindest einen Grenzwischwinkel gesteuert wird. Unter einem "Grenzwischwinkel" soll in diesem Zusammenhang insbesondere ein Winkel verstanden werden, der einen Schaltpunkt insbesondere der Steuer- und/oder Regeleinheit bildet. Bei einem Überschreiten oder Unterschreiten des Grenzwischwinkels von einem Wischblatt, wird insbesondere ein Auftragen von Waschwasser aktiviert oder deaktiviert. Ferner ist es denkbar, dass ein Waschwasserdruck beim Überschreiten oder Unterschreiten des Grenzwischwinkels verändert wird. Weiterhin vorteilhaft wird ein Auftragen von Waschwasser über zumindest eine Vorlaufzeit gesteuert, die noch vor einer Wischblattbewegung abläuft.

In einer weiteren Ausgestaltung der Erfindung wird vorgeschlagen, dass der zumindest eine Grenzwischwinkel in Abhängigkeit des zumindest einen Betriebsparameters eingestellt wird, wodurch eine besonders einfache Einstellung der Waschwassermenge vorgenommen werden kann.

Ferner wird vorgeschlagen, dass die Wischvorrichtung mit einer Überlastsicherung vor einem Überlasten geschützt wird, wodurch eine Beschädigung der Wischvorrichtung bei einer Überlast, beispielsweise durch Schnee und/oder Eis, geschützt werden kann. Es ist in diesem Zusammenhang insbesondere denkbar, dass die Wischvorrichtung bei einem Auslösen der Überlastsicherung in eine Ausgangsposition zurückfährt oder eine aktuelle Position vorteilhaft für eine bestimmte Zeit beibehält, so dass eine Ursache für den Überlastfall beseitigt werden kann.

Ein besonders zuverlässiger Schutz vor Beschädigung kann erreicht werden, wenn die Überlastsicherung bei einem Überschreiten eines Drehmoments der Wischvorrichtung über zumindest ein Maximaldrehmoment ausgelöst wird. Das Drehmoment kann in diesem Zusammenhang insbesondere über einen Ansteuerstrom eines Wischaktuators und/oder über einen Drehmomentsensor ermittelt werden.

Eine besonders präzise Ermittlung eines Überlastfalls kann erzielt werden, wenn das zumindest eine Maximaldrehmoment in Abhängigkeit des zumindest einen Betriebsparameters eingestellt wird. Bevorzugt weist das Maximaldrehmoment in einem Winterprogramm zumindest teilweise einen niedrigeren Wert auf als in einem Übergangsprogramm und/oder einem Sommerprogramm. Weiterhin vorteilhaft weist das Maximaldrehmoment in einem Übergangsprogramm ebenfalls einen niedrigeren Wert auf als in einem Sommerprogramm.

Wird das zumindest eine Maximaldrehmoment in Abhängigkeit eines Stellwischwinkels eingestellt, kann eine Ermittlung eines Überlastfalls weiter präzisiert werden. Insbesondere beschreibt das Maximaldrehmoment eine Kurve, die einer Kurve eines Standarddrehmoments angenähert ist. Die Kurve des Standarddrehmoments beschreibt einen normalen, zu erwartenden Drehmomentverlauf mit dem ein Wischblatt um eine Antriebsachse geschwenkt wird.

Wird der zumindest eine Betriebsparameter in Abhängigkeit zumindest einer Datumsangabe eingestellt, können jahreszeitentypische Faktoren, wie insbesondere Laub oder hohe Fahrgeschwindigkeiten beim Wischvorgang berücksichtigt werden.

Ein Wischvorgang kann an geografische Gegebenheiten angepasst werden, wenn der zumindest eine Betriebsparameter in Abhängigkeit zumindest einer geografischen Breite eingestellt wird. Weiterhin vorteilhaft wird der zumindest eine Betriebsparameter in Abhängigkeit zumindest einer geografischen Länge eingestellt. Es ist in diesem Zusammenhang ebenfalls denkbar, eine Höhe über dem mittleren Meeresspiegel zu berücksichtigen. Vorteilhaft wird die geografische Lage zumindest teilweise über ein satellitengestütztes Positionssystem und/oder einen barometrischen Höhensensor bestimmt. In einer zusätzlichen Ausgestaltung wird vorgeschlagen, dass die geografische Lage von einem separaten, insbesondere fest in einem Kraftfahrzeug verbauten, Navigationssystem übermittelt wird. Es ist in diesem Zusammenhang denkbar, eine Positionsdatenübertragung über ein bestehendes Bus-System zu übermitteln, wie insbesondere über ein CAN-Bus-System.

Wird der zumindest eine Betriebsparameter in Abhängigkeit zumindest einer Umgebungshelligkeit eingestellt, können Sichtverhältnisse auf den Wischvorgang berücksichtigt werden. Beispielsweise kann eine Waschwassermenge bei Nacht reduziert werden um eine gute Sicht zu gewährleisten. Zusätzlich ist es denkbar, dass der zumindest eine Betriebsparameter in Abhängigkeit von einer Blendung durch den Gegenverkehr eingestellt wird. Weiterhin ist es denkbar, dass der Betriebsparameter in Abhängigkeit eines Insektenaufkommens, insbesondere eines Mückenaufkommens eingestellt wird.

Ein Eintreten von Waschwasser in eine Fahrgastzelle kann vorteilhaft vermieden werden, wenn der zumindest eine Betriebsparameter in Abhängigkeit von einem Fahrgastzellenöffnungszustand eingestellt wird. Unter einem "Fahrgastzellenöffnungszustand" soll in diesem Zusammenhang insbesondere ein Zustand verstanden werden, bei dem eine Fahrgastzelle zu einer Umgebung hin geöffnet ist. Insbesondere umfasst der Fahrgastzellenöffnungszustand eine Information über geöffnete Fensterscheiben, geöffnete Türen, geöffnete Schiebedachfenster und/oder ein geöffnetes Cabriodach. Ist die Fahrgastzelle geöffnet, kann eine Waschwassermenge reduziert werden. Zusätzlich ist es denkbar, dass der zumindest eine Betriebsparameter in Abhängigkeit von einer Luftfeuchte eingestellt wird.

Es wird ferner eine Wischvorrichtung mit zumindest einer Steuer- und/oder Regeleinheit vorgeschlagen, wobei die Steuer- und/oder Regeleinheit dazu vorgesehen ist, zumindest einen Betriebsparameter in Abhängigkeit von zumindest einem von einem Scheibenbedeckungsparameter verschiedenen Parameter einzustellen, wodurch ein Wischvorgang vorteilhaft an Umgebungsgegebenheiten und/oder Fahrzeugeinstellungen angepasst werden kann.

Vorteilhaft weist die Wischvorrichtung zumindest einen Wischaktuator auf, der dazu vorgesehen ist, von der Steuer- und/oder Regeleinheit angesteuert zu werden, wodurch ein einfacher Wischblattantrieb erzielt werden kann. Bevorzugt ist der Wischaktuator elektrisch ansteuerbar.

In einer weiteren Ausgestaltung wird vorgeschlagen, dass die Wischvorrichtung zumindest eine Waschwasserpumpe umfasst, die dazu vorgesehen ist, von der Steuer- und/oder Regeleinheit angesteuert zu werden, wodurch eine Waschwassermenge präzise auf eine Fahrzeugscheibe aufgetragen werden kann. Bevorzugt ist die Waschwasserpumpe elektrisch ansteuerbar.

Zusätzlich wird vorgeschlagen, dass die Wischvorrichtung zumindest einen Wischarm umfasst. Weiterhin vorteilhaft umfasst die Wischvorrichtung zumindest ein Wischblatt, insbesondere ein gelenkfreies Wischblatt, das dazu vorgesehen ist, am zumindest einen Wischarm angeschlossen zu werden.

Die erfindungsgemäße Wischvorrichtung soll hierbei nicht auf die oben beschriebene Anwendung und Ausführungsform beschränkt sein. Insbesondere kann die erfindungsgemäße Wischvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein schematischer Aufbau einer erfindungsgemäßen Wischvorrichtung,
- Fig. 2: einen Teilbereich einer Fahrzeugscheibe mit einem Wischblatt und einem Wischarm in einer Draufsicht,
- Fig. 3: ein Diagramm eines Drehmomentverlaufs ohne Überlastfall und
- Fig. 4: ein Diagramm eines Drehmomentverlaufs mit möglichem Überfall.

### Beschreibung der Ausführungsbeispiele

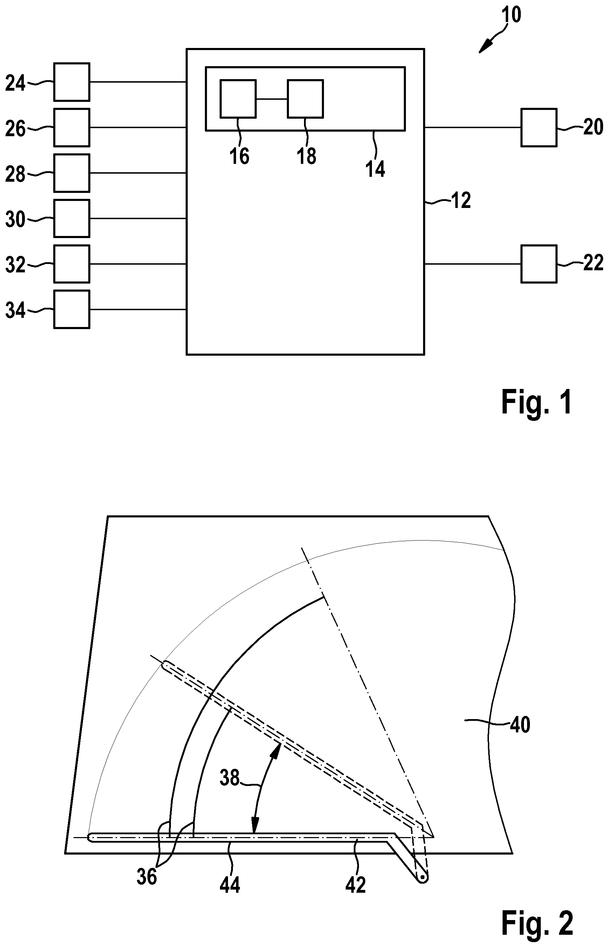

In der Figur 1 ist schematisch ein Aufbau einer erfindungsgemäßen Wischvorrichtung 10 gezeigt. Die Wischvorrichtung 10 ist zur Reinigung einer in der Figur 2 dargestellten Fahrzeugscheibe 40 eines Kraftfahrzeugs vorgesehen. Die Fahrzeugscheibe 40 ist dabei in einem Front- oder Heckbereich des Kraftfahrzeugs angeordnet. Zur Reinigung der Fahrzeugscheibe 40 ist die Wischvorrichtung 10 einerseits zum rein mechanischen Wischen als auch zum mechanischen Wischen mit zusätzlichem Auftragen von Waschwasser vorgesehen.

Die in der Figur 1 gezeigte Wischvorrichtung 10 weist eine Steuer- und/oder Regeleinheit 12 auf. Die Steuer- und/oder Regeleinheit 12 umfasst ein Steuergerät 14, welches eine Prozessoreinheit 16 und eine Speichereinheit 18 sowie ein in der Speichereinheit 18 gespeichertes Betriebsprogramm umfasst.

Die Wischvorrichtung 10 weist ferner einen Wischaktuator 20 auf, der von der Steuer- und/oder Regeleinheit 12 angesteuert wird. Eine Ansteuerung des Wischaktuators 20 erfolgt dabei elektrisch. Es ist in diesem Zusammenhang jedoch auch denkbar, den Wischaktuator 20 pneumatisch und/oder hydraulisch anzusteuern. Der Wischaktuator 20 ist von einem Elektromotor gebildet, der über eine nicht näher beschriebene Getriebeeinheit mit einem in der Figur 2 gezeigten Wischarm 42 gekoppelt ist. Am Wischarm 42 ist ein gelenkfreies Wischblatt 44 lösbar angeschlossen.

Die Wischvorrichtung 10 umfasst ferner eine Waschwasserpumpe 22, die von der Steuer- und/oder Regeleinheit 12 angesteuert wird. Die Waschwasserpumpe 22 ist elektrisch ansteuerbar. Es ist in diesem Zusammenhang jedoch auch denkbar, dass die Waschwasserpumpe 22 pneumatisch und/oder hydraulisch ansteuerbar ausgebildet ist. Die Waschwasserpumpe 22 fördert in einem Betriebszustand Waschwasser aus einem nicht dargestellten Waschwassertank zu Waschwasserdüsen. Aus den Waschwasserdüsen tritt das Waschwasser aus und gelangt auf die von der Wischvorrichtung 10 zu wischende Fahrzeugscheibe 40. Eine Förderleistung der Waschwasserpumpe 22 ist über eine Strom- und/oder Spannungsregulierung einstellbar.

Die Steuer- und/oder Regeleinheit 12 ist mit einem Bus-System 24 gekoppelt über das Daten mit anderen Busteilnehmern austauschbar sind. In der Speichereinheit 18 sind Betriebsparameter beziehungsweise Betriebsparameterprogramme, die Betriebsparametern enthalten, gespeichert. Die Betriebsparameter beziehungsweise die Betriebsparameterprogramme umfassen dabei Betriebsinformationen über Wischgeschwindigkeiten, Wischintervallzeiten, Maximaldrehmomente, eine Gesamtwischlaufzeit, Waschwassermengen und Waschwasserdrücke. Es ist in diesem Zusammenhang denkbar, weitere, dem Fachmann als sinnvoll erscheinende Betriebsinformationen in Betriebsparametern beziehungsweise Betriebsparameterprogrammen zu speichern. Die Betriebsparameter dienen im Wesentlichen als Referenzwerte oder als Sollwerte. Zudem sind die Betriebsparameter veränderbar beziehungsweise einstellbar. Eine Einstellung der Betriebsparameter erfolgt vollautomatisch durch die Steuer- und/oder Regeleinheit 12 in Abhängigkeit von mehreren von Fahrzeugscheibenbedeckungsparametern verschiedenen Parametern.

Zur Erfassung eines ersten Parameters ist ein Außentemperatursensor 26 an der Steuer- und/oder Regeleinheit 12 angeschlossen. Der Außentemperatursensor 26 erfasst dabei eine Außentemperatur außerhalb eines Kraftfahrzeugs, an welchem die Wischvorrichtung 10 angeordnet ist. Die Außentemperatur bildet den ersten Parameter, welcher an die Steuer- und/oder Regeleinheit 12 übermittelt wird. Es ist denkbar, dass der Außentemperatursensor 26 mehrere Temperaturfühler aufweist, die an verschiedenen Orten des Kraftfahrzeugs angeordnet sind, wie insbesondere in einer Bodennähe und/oder auf einem Fahrzeugdach. Es ist in diesem Zusammenhang auch denkbar, eine Außentemperatur von zumindest einem bereits vorhandenen, an das Bus-System 24 angeschlossenen Temperatursensor auszuwerten. Je nach Einsatzfall kann dadurch eine Außentemperatur auch bei einer Störfunktion oder einem Entfall des Außentemperatursensors 26 weiterhin von der Steuer- und/oder Regeleinheit 12 ermittelt und zur Einstellung von Betriebsparametern berücksichtigt werden.

Zusätzlich ist ein Datumsgeber 28 vorgesehen, der an der Steuer- und/oder Regeleinheit 12 angeschlossen ist. Der Datumsgeber 28 ermittelt beispielsweise über eine Funkübertragung das aktuelle Datum und übermittelt einen zweiten Parameter, welcher die Datumsangabe umfasst, an die Steuer- und/oder Regeleinheit 12. Es ist in diesem Zusammenhang auch denkbar, eine Datumsangabe von bereits vorhandenen, an das Bus-System 24 angeschlossenen Datumsgebern, wie insbesondere einem Navigationssystem, auszuwerten. Je nach Einsatzfall kann dadurch eine Datumsangabe auch bei einer Störfunktion oder einem Entfall des Datumsgebers 28 weiterhin von der Steuer- und/oder Regeleinheit 12 ermittelt und zur Einstellung von Betriebsparametern berücksichtigt werden. Zusätzlich ist es prinzipiell denkbar, einen Uhrzeitgeber vorzusehen, um eine Uhrzeit an die Steuer- und/oder Regeleinheit 12 zu übertragen.

Des Weiteren ist zur Erfassung einer Umgebungshelligkeit ein Helligkeitssensor 30 an der Steuer- und/oder Regeleinheit 12 angeschlossen. Der Helligkeitssensor 30 erfasst dabei eine Helligkeit außerhalb des Kraftfahrzeugs, an welchem die Wischvorrichtung 10 angeordnet ist und übermittelt einen dritten Parameter, welcher die Helligkeit umfasst, an die Steuer- und/oder Regeleinheit 12. Es ist denkbar, dass der Helligkeitssensor 30 mehrere Helligkeitsfühler aufweist, die an verschiedenen Orten des Kraftfahrzeugs angeordnet sind. Es ist in diesem Zusammenhang auch denkbar, eine Helligkeit von bereits vorhandenen, an das Bus-System 24 angeschlossene Helligkeitssensoren auszuwerten. Je nach Einsatzfall kann dadurch eine Helligkeit auch bei einer Störfunktion oder einem Entfall des Helligkeitssensors 30 weiterhin von der Steuer- und/oder Regeleinheit 12 ermittelt und zur Einstellung von Betriebsparametern berücksichtigt werden.

Ferner ist zur Bestimmung einer geographischen Gegebenheit ein Positionsgeber 32 an der Steuer- und/oder Regeleinheit 12 angeschlossen. Der Positionsgeber 32 weist einen GPS-Empfänger auf. Der Positionsgeber 32 erfasst dabei Positionsdaten des aktuellen Standorts, die einen Längengrad, einen Breitengrad sowie eine Höhe über dem mittleren Meeresspiegel enthalten. Ein vierter Parameter, weleher die Positionsdaten umfasst, wird an die Steuer- und/oder Regeleinheit 12 übermittelt. Es ist in diesem Zusammenhang auch denkbar, Positionsdaten von einem bereits vorhandenen, an das Bus-System 24 angeschlossenen Positionsgeber, wie beispielsweise einem fest in einem Kraftfahrzeug verbauten Navigationssystem, auszuwerten. Je nach Einsatzfall kann dadurch ein aktueller Standort auch bei einer Störfunktion oder einem Entfall des Positionsgebers 32 weiterhin von der Steuer- und/oder Regeleinheit 12 ermittelt und zur Einstellung von Betriebsparametern berücksichtigt werden. Zusätzlich ist es denkbar, einen barometrischen Höhensensor zur präzisen Ermittlung der Höhe über dem mittleren Meeresspiegel an die Steuer- und/oder Regeleinheit 12 anzuschließen.

Ferner ist ein Drehmomentsensor 34 an der Steuer- und/oder Regeleinheit 12 angeschlossen. Der Drehmomentsensor 34 ermittelt ein aktuelles Drehmoment 46, welches an einer nicht näher gezeigten Antriebsachse, um welche der Wischarm 42 schwenkbar gelagert ist, anliegt. Der Drehmomentsensor 34 übermittelt einen fünften Parameter, welcher das aktuelle Drehmoment 46 umfasst, an die Steuer- und/oder Regeleinheit 12. Es ist in diesem Zusammenhang insbesondere auch denkbar, dass ein aktuelles Drehmoment 46 aus einer Messung eines Ansteuerstroms des Wischaktuators 20 ermittelt wird.

Die Steuer- und/oder Regeleinheit 12 umfasst drei Betriebsparameterprogramme, in welchen jeweils angepasste Betriebsparameter gespeichert sind. Genauer umfasst die Steuer- und/oder Regeleinheit 12 ein Winterprogramm, ein Übergangsprogramm und ein Sommerprogramm. Bei einem Unterschreiten der Außentemperatur unter eine erste Grenztemperatur wird von der Steuer- und/oder Regeleinheit 12 ein Winterprogramm aktiviert. Die erste Grenztemperatur beträgt hierbei 4°C. Bei einem Überschreiten der Außentemperatur über eine zweite Grenztemperatur wird von der Steuer- und/oder Regeleinheit 12 ein Winterprogramm aktiviert. Die zweite Grenztemperatur beträgt hierbei 10°C. Befindet sich die Außentemperatur zwischen der ersten Grenztemperatur und der zweiten Grenztemperatur, also zwischen 4°C und 10°C, wird von der Steuer- und/oder Regeleinheit 12 ein Übergangsprogramm aktiviert. Es ist in diesem Zusammenhang prinzipiell auch denkbar, andere, dem Fachmann als sinnvoll erscheinende Werte für die Grenztemperaturen festzulegen. Prinzipiell ist zu jedem Zeitpunkt genau ein Betriebsparameterprogramm aktiviert.

In einer zusätzlichen Ausgestaltung werden auch andere Parameter zur Festlegung zumindest eines Betriebsparameters beziehungsweise des Betriebsparameterprogramms berücksichtigt. Insbesondere ist es denkbar, dass das aktuelle Datum in Kombination mit dem aktuellen Standort von der Steuer- und/oder Regeleinheit 12 verarbeitet wird, um das am besten geeignete Betriebsparameterprogramm zu wählen. Dabei wird ein Betriebsparameter von der Steuer- und/oder Regeleinheit 12 in Abhängigkeit einer geografischen Breite eingestellt. Ebenso wird ein Betriebsparameter von der Steuer- und/oder Regeleinheit 12 in Abhängigkeit einer geografischen Länge eingestellt. Des Weiteren wird ein Betriebsparameter von der Steuer- und/oder Regeleinheit 12 in Abhängigkeit von einer Höhe über dem mittleren Meeresspiegel eingestellt.

Desweiteren ist es denkbar, dass die Steuer- und/oder Regeleinheit 12 den aktuellen Standort mit einer Karte vergleicht, die Informationen über örtliche Witterungsverhältnisse und/oder Witterungsbesonderheiten umfasst.

Ein Auftragen von Waschwasser wird über einen Grenzwischwinkel 36 und einen Waschwasseransteuerparameter gesteuert. Bei einer Waschwasseranforderung über den Waschwasserparameter wird zunächst die Waschwasserpumpe 22 von der Steuer- und/oder Regeleinheit 12 angesteuert beziehungsweise aktiviert. Nach einer definierbaren Vorlaufzeit wird von der Steuer- und/oder Regeleinheit 12 der Wischaktuator 20 angesteuert. Ein Stellwischwinkel 38 beschreibt die Differenz zwischen einer Ausgangslage und einem aktuellen Winkel des Wischarms 42 (Figur 2). In der Ausgangslage beträgt der Stellwischwinkel 0°. Der Wischarm 42 schwenkt aus einer Ausgangslage um die Schwenkachse, wobei sich der Stellwischwinkel 38 vergrößert. Beim Überschreiten des Grenzwischwinkels 36 wird die Waschwasserpumpe 22 von der Steuer- und/oder Regeleinheit 12 deaktiviert.

Der Grenzwischwinkel 36 wird in Abhängigkeit eines Betriebsparameters eingestellt. Genauer gesagt wird der Grenzwischwinkel 36 in Abhängigkeit des Betriebsparameterprogramms eingestellt. Ist das Winterprogramm aktiviert, beträgt der Grenzwischwinkel 60°. Bei aktiviertem Übergangsprogramm beträgt der Grenzwischwinkel 30°. Ist das Sommerprogramm aktiviert, beträgt der Grenzwischwinkel 0°, wodurch die Waschwasserpumpe 22 direkt nach Ablauf der Vorlaufzeit deaktiviert wird. Prinzipiell ist es auch denkbar, dass ein Waschwasserdruck in Abhängigkeit des Betriebsparameterprogramms verändert wird, wobei der Waschwasserdruck im Winterprogramm höher als im Sommerprogramm ist. Es ist in diesem Zusammenhang zusätzlich denkbar, dass der Grenzwischwinkel 36 bei Dunkelheit niedriger eingestellt wird, als bei Helligkeit. Dazu wird der dritte Parameter, welcher die Helligkeit umfasst, von der Steuer- und/oder Regeleinheit 12 ausgewertet. Zusätzlich ist es denkbar, dass der Grenzwischwinkel 36 bei einer Blendung durch den Gegenverkehr niedriger eingestellt wird als ohne eine Blendung. Es ist in diesem Zusammenjang auch denkbar, dass der Grenzwischwinkel 36 bei einem erhöhten Insektenaufkommen höher eingestellt wird, als ohne ein erhöhtes Insektenaufkommen.

Der Grenzwischwinkel 36 wird ferner in Abhängigkeit von einem Fahrgastzellenöffnungszustand eingestellt. Wenn eine nicht dargestellte Fahrgastzelle zu einer Umgebung hin geöffnet ist, wird der Grenzwischwinkel 36 verkleinert, beziehungsweise auf 30° eingestellt. Zusätzlich wird der Grenzwischwinkel 36 bei einer hohen Luftfeuchte, insbesondere einer Luftfeuchte größer als 90%, verkleinert beziehungsweise auf 30° eingestellt.

Die Wischvorrichtung 10 wird mit einer Überlastsicherung vor einem Überlasten geschützt. Die Überlastsicherung ist teilweise in der Steuer- und/oder Regeleinheit 12 implementiert. Die Steuer- und/oder Regeleinheit 12 erfasst dabei den fünften Parameter, welcher das aktuelle Drehmoment 46 der Antriebsachse umfasst. Das aktuelle Drehmoment 46 wird von der Steuer- und/oder Regeleinheit 12 mit einem Maximaldrehmoment verglichen. Überschreitet das aktuelle Drehmoment 46 das Maximaldrehmoment, löst die Steuer- und/oder Regeleinheit 12 einen Überlastfall aus. Der Wischarm 42 fährt bei einem Auslösen der Überlastsicherung, also bei einem Eintreten des Überlastfalls, in die Ausgangslage zurück.

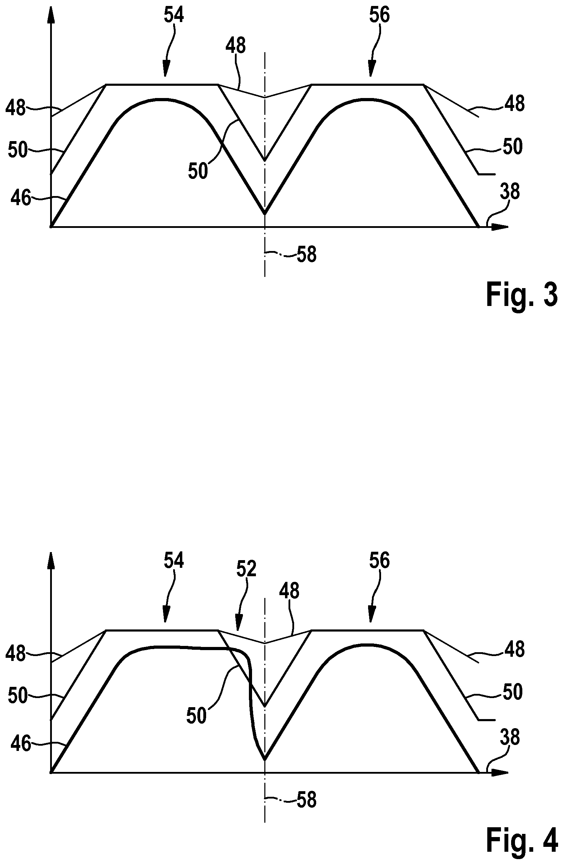

Figur 3 zeigt einen üblichen Drehmomentverlauf während eines Wischvorgangs, der durch zwei aneinander angrenzende Funktionen zweiter Ordnung beschrieben werden kann. In einem ersten Stellwinkelbereich 54 bewegt sich der Wischarm 42 aus einer Verstauposition heraus und gerät in einen nicht dargestellten Fahrtwindbereich. Dadurch steigt das aktuelle Drehmoment 46 bis zu einem Maximalwert an. Anschließend fällt das aktuelle Drehmoment 46 ab und weist schließlich in einer oberen Wendelage 58 einen Wert von Null auf. In der oberen Wendelage 58 bewegt sich der Wischarm 42 kurzzeitig nicht. Anschließend fährt der Wischarm in einem zweiten Stellwinkelbereich 56 zurück in die Verstauposition, wobei das aktuelle Drehmoment 46 abermals ansteigt und zuletzt auf Null fällt.

Das Maximaldrehmoment wird in Abhängigkeit des Stellwischwinkels 38 eingestellt. Je nach zu erwartender Belastung wird das Maximaldrehmoment jeder Phase eines Wischvorgangs angepasst. In der Steuer- und/oder Regeleinheit 12 sind dabei eine erste Maximaldrehmomentkurve 48 und eine zweite Maximaldrehmomentkurve 50 gespeichert, die zu jedem Stellwischwinkel 38 ein Maximaldrehmoment zuordnen.

Die erste Maximaldrehmomentkurve 48 weist bis zum Erreichen eines ersten Maximalwerts im ersten Stellwinkelbereich 54 ein höheres Maximaldrehmoment als die zweite Maximaldrehmomentkurve 50 und eine leichte positive Steigung auf. In einem Bereich des ersten Maximalwerts des aktuellen Drehmoments 46 weisen die erste Maximaldrehmomentkurve 48 und die zweite Maximaldrehmomentkurve 50 einen gleichen Wert und eine Steigung von Null auf. Anschließend weist die erste Maximaldrehmomentkurve 48 wieder bis zum Erreichen der oberen Wendelage 58 im ersten Stellwinkelbereich 54 ein höheres Maximaldrehmoment als die zweite Maximaldrehmomentkurve 50 und eine leichte negative Steigung auf.

Von der oberen Wendelage 58 ausgehend weist die erste Maximaldrehmomentkurve 48 bis zum Erreichen eines zweiten Maximalwerts im zweiten Stellwinkelbereich 56 ebenfalls ein höheres Maximaldrehmoment als die zweite Maximaldrehmomentkurve 50 und eine leichte positive Steigung auf. In einem Bereich des zweiten Maximalwerts des aktuellen Drehmoments 46 weisen die erste Maximaldrehmomentkurve 48 und die zweite Maximaldrehmomentkurve 50 einen gleichen Wert und eine Steigung von Null auf. Anschließend weist die erste Maximaldrehmomentkurve 48 wieder bis zum Erreichen der Verstauposition im zweiten Stellwinkelbereich 56 ein höheres Maximaldrehmoment als die zweite Maximaldrehmomentkurve 50 und eine leichte negative Steigung auf. Somit stimmen die verschiedenen Maximaldrehmomentkurven 48, 50 lediglich in Teilbereichen miteinander überein. Des Weiteren ist es zusätzlich denkbar, dass die verschiedenen Maximaldrehmomentkurven vollständig voneinander abweichen. Es ist in diesem Zusammenhang denkbar, weitere Maximaldrehmomentkurven in der Steuer- und/oder Regeleinheit 12 zu speichern. Ist das Winterprogramm oder das Übergangsprogramm aktiviert, vergleicht die Steuer- und/oder Regeleinheit 12 das aktuelle Drehmoment 46 mit der zweiten Maximaldrehmomentkurve 50. Ist das aktuelle Drehmoment 46 bei einem bestimmten Stellwischwinkel 38 höher als das Maximaldrehmoment dieses Stellwischwinkels 38, löst die Steuer- und/oder Regeleinheit 12 den Überlastfall aus und fährt das Wischblatt 44 beziehungsweise den Wischarm 42 nach Möglichkeit zurück in die Ausgangslage. Somit weist das Maximaldrehmoment im Winterprogramm einen niedrigeren Wert auf als in einem Sommerprogramm.

Ist das Sommerprogramm aktiviert, vergleicht die Steuer- und/oder Regeleinheit 12 das aktuelle Drehmoment 46 mit der ersten Maximaldrehmomentkurve 48. Ist das aktuelle Drehmoment 46 bei einem bestimmten Stellwischwinkel 38 höher als das Maximaldrehmoment dieses Stellwischwinkels 38, löst die Steuer- und/oder Regeleinheit 12 den Überlastfall aus und fährt das Wischblatt 44 beziehungsweise den Wischarm 42 nach Möglichkeit zurück in die Verstauposition.

Es ist in diesem Zusammenhang auch denkbar, eine Standarddrehmomentkurve zu speichern. Das aktuelle Drehmoment 46 wird von der Steuer- und/oder Regeleinheit 12 mit der Standarddrehmomentkurve verglichen. Liegt das aktuelle Drehmoment 46 außerhalb eines Toleranzbands, löst die Steuer- und/oder Regeleinheit 12 den Überlastfall aus. Eine anzuwendende Toleranz hängt von zumindest einem Parameter und/oder vom aktivierten Betriebsprogramm ab.

In der Figur 4 ist ein Drehmomentverlauf gezeigt, bei dem das aktuelle Drehmoment 46 in einem Bereich 52 von einem Standarddrehmoment abweicht. Die Abweichung beziehungsweise das erhöhte Drehmoment 46 kann dabei beispielsweise durch eine hohe Fahrgeschwindigkeit, eine Beschädigung und/oder einen Fremdkörper auf der Fahrzeugscheibe 40 verursacht werden.

Ist insbesondere aufgrund der Außentemperatur und/oder aufgrund des aktuellen Datums das Sommerprogramm aktiv, vergleicht die Steuer- und/oder Regeleinheit 12 das aktuelle Drehmoment 46 mit dem Maximaldrehmoment im betreffenden Bereich 52 der ersten Maximaldrehmomentkurve 48. Da das Maximaldrehmoment im Bereich 52 größer ist als das aktuelle Drehmoment 46, löst die Steuer- und/oder Regeleinheit 12 keinen Überlastfall aus, da mit einem erhöhten Drehmoment 46 aufgrund beispielsweise hoher Fahrgeschwindigkeit zu rechnen ist.

Ist insbesondere aufgrund der Außentemperatur und/oder aufgrund des aktuellen Datums das Winterprogramm oder das Übergangsprogramm aktiv, vergleicht die Steuer- und/oder Regeleinheit 12 das aktuelle Drehmoment 46 mit dem Maximaldrehmoment im betreffenden Bereich 52 der zweiten Maximaldrehmomentkurve 50. Da das Maximaldrehmoment im Bereich 52 kleiner ist als das aktuelle Drehmoment 46, löst die Steuer- und/oder Regeleinheit 12 einen Überlastfall aus, da sich das erhöhte Drehmoment aufgrund der Jahreszeit mit höherer Wahrscheinlichkeit durch Vereisung und/oder Schnee erklären lässt, welcher daraufhin manuell beseitigt werden muss.

## Patentansprüche

1. Verfahren zur Ansteuerung einer Wischvorrichtung (10) über eine Steuer- und/oder Regeleinheit (12), wobei zumindest ein Betriebsparameter in Abhängigkeit von zumindest einem von einem Fahrzeugscheibenbedeckungsparameter verschiedenen Parameter eingestellt wird, und wobei die Wischvorrichtung (10) mit einer Überlastsicherung vor einem überlasten geschützt wird, wobei die Überlastsicherung bei einem Überschreiten eines Drehmoments (46) der Wischvorrichtung (10) über zumindest ein Maximaldrehmoment ausgelöst wird, wobei das zumindest eine Maximaldrehmoment in Abhängigkeit des zumindest einen Betriebsparameters eingestellt wird, **dadurch gekennzeichnet, dass** der zumindest eine Betriebsparameter in Abhängigkeit zumindest einer Außentemperatur eingestellt wird.

2. Verfahren nach Anspruch 1, **dadurch gekennzeichnet, dass** bei einem Unter schreiten der zumindest einen Außentemperatur unter eine erste Grenztemperatur ein Winterprogramm aktiviert wird.

3. Verfahren nach Anspruch 1, **dadurch gekennzeichnet, dass** die erste Grenztemperatur einen Wert von maximal 4°C aufweist.

4. Verfahren zumindest nach Anspruch 1, **dadurch gekennzeichnet, dass** bei einem Unterschreiten der zumindest einen Außentemperatur unter eine zweite Grenztemperatur ein Übergangsprogramm aktiviert wird.

5. Verfahren zumindest nach Anspruch 1, **dadurch gekennzeichnet, dass** bei einem Überschreiten einer zweiten Grenztemperatur ein Sommerprogramm aktiviert wird.

6. Verfahren nach einem der Ansprüche 4 oder 5, **dadurch gekennzeichnet, dass** die zweite Grenztemperatur einen Wert zwischen 6°C und 14°C aufweist.

7. Verfahren nach einem der vorhergehenden Ansprüche, **dadurch gekennzeichnet, dass** bei einem Auftragen von Waschwasser der zumindest eine Betriebsparameter berücksichtigt wird.

8. Verfahren nach einem der vorhergehenden Ansprüche, **dadurch gekennzeichnet, dass** ein Auftragen von Waschwasser über zumindest einen Grenzwischwinkel (36) gesteuert wird.

9. Verfahren nach einem der vorhergehenden Ansprüche, **dadurch gekennzeichnet, dass** der zumindest eine Grenzwischwinkel (36) in Abhängigkeit des zumindest einen Betriebsparameters eingestellt wird.

10. Verfahren nach einem der vorhergehenden Ansprüche, **dadurch gekennzeichnet, dass** das zumindest eine Maximaldrehmoment in Abhängigkeit eines Stellwischwinkels (38) eingestellt wird.

11. Verfahren nach einem der vorhergehenden Ansprüche, **dadurch gekennzeichnet, dass** der zumindest eine Betriebsparameter in Abhängigkeit zumindest einer Datumsangabe eingestellt wird.

12. Verfahren nach einem der vorhergehenden Ansprüche, **dadurch gekennzeichnet, dass** der zumindest eine Betriebsparameter in Abhängigkeit zumindest einer geografischen Breite eingestellt wird.

13. Verfahren nach einem der vorhergehenden Ansprüche, **dadurch gekennzeichnet, dass** der zumindest eine Betriebsparameter in Abhängigkeit zumindest einer geografischen Länge eingestellt wird.

14. Verfahren nach einem der vorhergehenden Ansprüche, **dadurch gekennzeichnet, dass** der zumindest eine Betriebsparameter in Abhängigkeit zumindest einer Umgebungshelligkeit eingestellt wird.

15. Verfahren nach einem der vorhergehenden Ansprüche, **dadurch gekennzeichnet, dass** der zumindest eine Betriebsparameter in Abhängigkeit von einem Fahrzeugöffnungszustand eingestellt wird.

16. Wischvorrichtung (10) mit zumindest einer Steuer- und/oder Regeleinheit (12), wobei die Steuer- und/oder Regeleinheit (12) dazu vorgesehen ist, zumindest einen Betriebsparameter in Abhängigkeit von zumindest einem von einem Scheibenbedeckungsparameter verschiedenen Parameter einzustellen, wobei ein Drehmomentsensor (34) an der Steuer- und/oder Regeleinheit (12) angeschlossen ist, und eine Überlastsicherung teilweise in der Steuer- und/oder Regeleinheit (12) implementiert ist, wobei die Überlastsicherung dazu vorgesehen ist, bei einem Überschreiten eines Drehmoments (46) der Wischvorrichtung (10) über zumindest ein Maximaldrehmoment auszulösen, wobei das zumindest eine Maximaldrehmoment in Abhängigkeit des zumindest einen Betriebsparameters eingestellt wird, **dadurch gekennzeichnet, dass** der zumindest eine Betriebsparameter in Abhängigkeit zumindest einer Außentemperatur eingestellt wird.

17. Wischvorrichtung (10) nach Anspruch 16, **gekennzeichnet durch** zumindest einen Wischaktuator (20), der dazu vorgesehen ist, von der Steuer- und/oder Regeleinheit (12) angesteuert zu werden.

18. Wischvorrichtung (10) zumindest nach Anspruch 16, **gekennzeichnet durch** zumindest eine Waschwasserpumpe (22), die dazu vorgesehen ist, von der Steuer- und/oder Regeleinheit (12) angesteuert zu werden.

19. Wischvorrichtung (10) zumindest nach Anspruch 16, **gekennzeichnet durch** zumindest einen Wischarm (42).

20. Wischvorrichtung (10) nach Anspruch 19, **gekennzeichnet durch** zumindest ein Wischblatt (44), insbesondere ein gelenkfreies Wischblatt (44), das dazu vorgesehen ist, am zumindest einen Wischarm (42) angeschlossen zu werden.

## Claims

1. Method for controlling a wiper device (10) by means of a control and/or regulating unit (12), wherein at least one operating parameter is set depending on at least one parameter that is different from a vehicle windscreen coverage parameter , and wherein the wiper device (10) is protected against overloading with an overload protection means, wherein the overload protection is triggered in the event of a torque (46) of the wiper device (10) exceeding at least one maximum torque, wherein the at least one maximum torque is set depending on the at least one operating parameter,
**characterized in that** the at least one operating parameter is set depending on at least one external temperature.

2. Method according to Claim 1, **characterized in that** a winter program is activated in the event of the at least one external temperature falling below a first temperature limit.

3. Method according to Claim 1, **characterized in that** the first temperature limit has a value no greater than 4 °C.

4. Method at least according to Claim 1, **characterized in that** a transition program is activated in the event of the at least one external temperature falling below a second temperature limit.

5. Method at least according to Claim 1, **characterized in that** a summer program is activated on exceeding a second temperature limit.

6. Method according to either of Claims 4 or 5, **characterized in that** the second temperature limit has a value between 6°C and 14°C.

7. Method according to any one of the preceding claims, **characterized in that** the at least one operating parameter is taken into account during an application of washing water.

8. Method according to any one of the preceding claims, **characterized in that** an application of washing water is controlled by means of at least one wiping angle limit (36).

9. Method according to any one of the preceding claims, **characterized in that** the at least one wiping angle limit (36) is set depending on the at least one operating parameter.

10. Method at least according to any one of the preceding claims, **characterized in that** the at least one maximum torque is set depending on a wiper position angle (38).

11. Method according to any one of the preceding claims, **characterized in that** the at least one operating parameter is set depending on at least one item of date information.

12. Method according to any one of the preceding claims, **characterized in that** the at least one operating parameter is set depending on at least one latitude.

13. Method according to any one of the preceding claims, **characterized in that** the at least one operating parameter is set depending on at least one longitude.

14. Method according to any one of the preceding claims, **characterized in that** the at least one operating parameter is set depending on at least one ambient brightness.

15. Method according to any one of the preceding claims, **characterized in that** the at least one operating parameter is set depending on a vehicle open condition.

16. Wiper device (10) with at least one control and/or regulating unit (12), wherein the control and/or regulating unit (12) is provided to set at least one operating parameter depending on at least one parameter that is different from a screen coverage parameter, wherein a torque sensor (34) is connected to the control and/or regulating unit (12), and an overload protection means is partially implemented in the control and/or regulating unit (12), wherein the overload protection means is provided to be triggered in the event of a torque (46) of the wiper device (10) exceeding at least one maximum torque, wherein the at least one maximum torque is set depending on the at least one operating parameter, **characterized in that** the at least one operating parameter is set depending on at least one external temperature.

17. Wiper device (10) according to Claim 16, **characterized by** at least one wiper actuator (20) that is provided to be controlled by the control and/or regulating unit (12).

18. Wiper device (10) at least according to Claim 16, **characterized by** at least one washing water pump (22) that is provided to be controlled by the control and/or regulating unit (12).

19. Wiper device (10) at least according to Claim 16, **characterized by** at least one wiper arm (42).

20. Wiper device (10) according to Claim 19, **characterized by** at least one wiper blade (44), in particular a joint-free wiper blade (44), that is provided to be connected to the at least one wiper arm (42).

## Revendications

1. Procédé de commande d'un dispositif d'essuie-glace (10) par le biais d'une unité de commande et/ou de régulation (12), au moins un paramètre de fonctionnement étant réglé en fonction d'au moins un paramètre différent d'un paramètre de couverture de vitre de véhicule, et le dispositif d'essuie-glace (10) étant protégé contre les surcharges par un dispositif de protection contre les surcharges, le dispositif de sécurité contre les surcharges étant déclenché lorsqu'un couple (46) du dispositif d'essuie-glace (10) devient supérieur à au moins un couple maximal, l'au moins un couple maximum étant réglé en fonction de l'au moins un paramètre de fonctionnement, **caractérisé en ce que** l'au moins un paramètre de fonctionnement est réglé en fonction d'au moins une température extérieure.

2. Procédé selon la revendication 1, **caractérisé en ce qu'**un programme d'hiver est activé si l'au moins une température extérieure tombe au-dessous d'une première température limite.

3. Procédé selon la revendication 1, **caractérisé en ce que** la première température limite a une valeur de 4 °C maximum.

4. Procédé au moins selon la revendication 1, **caractérisé en ce qu'**un programme de transition est activé lorsque l'au moins une température extérieure tombe au-dessous d'une deuxième température limite.

5. Procédé au moins selon la revendication 1, **caractérisé en ce qu'**un programme d'été est activé lorsqu'une deuxième température limite est dépassée.

6. Procédé selon l'une des revendications 4 et 5, **caractérisé en ce que** la deuxième température limite a une valeur comprise entre 6 °C et 14 °C.

7. Procédé selon l'une des revendications précédentes, **caractérisé en ce que** l'au moins un paramètre de fonctionnement est pris en compte lors de l'application d'eau de lavage.

8. Procédé selon l'une des revendications précédentes, **caractérisé en ce que** l'application d'eau de lavage est commandée sur au moins un angle d'essuyage limite (36).

9. Procédé selon l'une des revendications précédentes, **caractérisé en ce que** l'au moins un angle d'essuyage limite (36) est réglé en fonction de l'au moins un paramètre de fonctionnement.

10. Procédé selon l'une des revendications précédentes, **caractérisé en ce que** l'au moins un couple maximal est réglé en fonction d'un angle d'essuie-glace de commande (38).

11. Procédé selon l'une des revendications précédentes, **caractérisé en ce que** l'au moins un paramètre de fonctionnement est réglé en fonction d'au moins une donnée.

12. Procédé selon l'une des revendications précédentes, **caractérisé en ce que** l'au moins un paramètre de fonctionnement est fixé en fonction d'au moins une latitude géographique.

13. Procédé selon l'une des revendications précédentes, **caractérisé en ce que** l'au moins un paramètre de fonctionnement est fixé en fonction d'au moins une longitude géographique.

14. Procédé selon l'une des revendications précédentes, **caractérisé en ce que** l'au moins un paramètre de fonctionnement est réglé en fonction d'au moins une luminosité ambiante.

15. Procédé selon l'une des revendications précédentes, **caractérisé en ce que** l'au moins un paramètre de fonctionnement est réglé en fonction d'un état d'ouverture du véhicule.

16. Dispositif d'essuie-glace (10) comprenant au moins une unité de commande et/ou de régulation (12), l'unité de commande et/ou de régulation (12) étant prévue pour régler au moins un paramètre de fonctionnement en fonction d'au moins un paramètre différent d'un paramètre de couverture de vitre, un capteur de couple (34) étant raccordé à l'unité de commande et/ou de régulation (12), et une protection contre les surcharges étant partiellement mise en œuvre dans l'unité de commande et/ou de régulation (12), le dispositif de protection contre les surcharges étant prévu pour se déclencher lorsque le couple (46) du dispositif d'essuie-glace (10) devient supérieur à au moins un couple maximal, l'au moins un couple maximal étant réglé en fonction de l'au moins un paramètre de fonctionnement, **caractérisé en ce que** l'au moins un paramètre de fonctionnement est réglé en fonction d'au moins une température extérieure.

17. Dispositif d'essuie-glace (10) selon la revendication 16, **caractérisé par** au moins un actionneur d'essuie-glace (20) qui est destiné à être commandé par l'unité de commande et/ou de régulation (12) .

18. Dispositif d'essuie-glace (10) au moins selon la revendication 16, **caractérisé par** au moins une pompe à eau de lavage (22) qui est prévue pour être commandée par l'unité de commande et/ou de régulation (12).

19. Dispositif d'essuie-glace (10) au moins selon la revendication 16, **caractérisé par** au moins un bras d'essuie-glace (42).

20. Dispositif d'essuie-glace (10) selon la revendication 19, **caractérisé par** au moins un balai d'essuie-glace (44), en particulier un balai d'essuie-glace non-articulé (44), qui est prévu pour être raccordé à l'au moins un bras d'essuie-glace (42).
